(19) Europäisches Patentamt
European Patent Office
Office européen des brevets

(11) **EP 3 645 455 B1**

(12) **FASCICULE DE BREVET EUROPEEN**

(45) Date de publication et mention de la délivrance du brevet:
**07.04.2021 Bulletin 2021/14**

(21) Numéro de dépôt: **17754188.5**

(22) Date de dépôt: **27.06.2017**

(51) Int Cl.:
*C01B 3/56* (2006.01)    *C01B 3/50* (2006.01)
*C01B 3/34* (2006.01)    *C01B 3/48* (2006.01)

(86) Numéro de dépôt international:
**PCT/FR2017/051720**

(87) Numéro de publication internationale:
**WO 2019/002700 (03.01.2019 Gazette 2019/01)**

(54) **PROCÉDÉ DE PRODUCTION D'HYDROGÈNE A HAUT RENDEMENT A PARTIR D'UN GAZ DE SYNTHÈSE, DÉGOULOTTAGE D'UNITÉ EXISTANTE**

VERFAHREN ZUR HERSTELLUNG MIT HOHEM ERTRAG VON WASSERSTOFF AUS EINEM SYNTHESEGAS UND ENGSTELLENBESEITIGUNG EINER BESTEHENDEN EINHEIT

PROCESS FOR HIGH-YIELD PRODUCTION OF HYDROGEN FROM A SYNTHESIS GAS, AND DEBOTTLENECKING OF AN EXISTING UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**06.05.2020 Bulletin 2020/19**

(73) Titulaire: **L'AIR LIQUIDE, Société Anonyme pour l'Etude et l'Exploitation des Procédés Georges Claude 75007 Paris (FR)**

(72) Inventeur: **ALLIDIERES, Laurent 38410 Saint Martin d'Uriage (FR)**

(74) Mandataire: **Air Liquide L'Air Liquide S.A. Direction de la Propriété Intellectuelle 75, Quai d'Orsay 75321 Paris Cedex 07 (FR)**

(56) Documents cités:
**EP-A1- 2 141 119      FR-A1- 2 877 939
US-A1- 2011 233 072      US-A1- 2014 332 405**

**EP 3 645 455 B1**

**Description**

La présente invention concerne un procédé de production d'hydrogène par reformage d'hydrocarbures, elle concerne aussi une méthode de dégoulottage d'une installation de production d'hydrogène existante, ainsi qu'une installation de production d'hydrogène.

Les systèmes de production d'hydrogène sont le plus souvent basés sur le reformage d'hydrocarbures légers - par hydrocarbures légers, on entend le plus souvent du méthane, généralement sous la forme de gaz naturel ou de bio méthane, mais aussi du naphta, du méthanol entre autres - ils font aussi appel aux procédés d'oxydation partielle ou de reformage auto thermique ; ces systèmes de production génèrent des mélanges gazeux contenant très majoritairement de l'hydrogène et du monoxyde de carbone, mais aussi du dioxyde de carbone, de l'eau ainsi que des composés trace, ces mélanges étant connus sous le nom de gaz de synthèse ou syngas. Le reformage à la vapeur est parmi ces systèmes le plus couramment utilisé, il permet de produire de l'ordre de 90% de l'hydrogène actuellement consommé dans le monde, autant pour satisfaire les besoins industriels que ceux liés à la mobilité.

Les installations correspondent la plupart du temps à des investissements faits en lien avec des contrats de fourniture de gaz longue durée, et il est très difficile initialement de prévoir ce que sera l'évolution de la demande (nouveaux clients et/ou augmentation des besoins des clients existants), de sorte que se pose fréquemment le problème d'augmenter la capacité de production d'hydrogène de l'installation tout en minimisant l'investissement nécessaire pour y parvenir.

L'invention présentée ci-après permet d'augmenter le rendement de récupération de l'hydrogène produit par des installations de production d'hydrogène conventionnelles, d'une valeur comprise entre environ 75% et 90% en fonction de la taille de l'installation et des paramètres opératoires à une valeur proche de 99%, quelle que soit la taille de l'installation.

En effet, ces installations comprennent typiquement une unité de purification d'hydrogène par adsorption à pression modulée, plus couramment identifiée comme unité PSA hydrogène ou PSA $H_2$ (acronyme de l'expression anglaise « pressure swing adsorption).

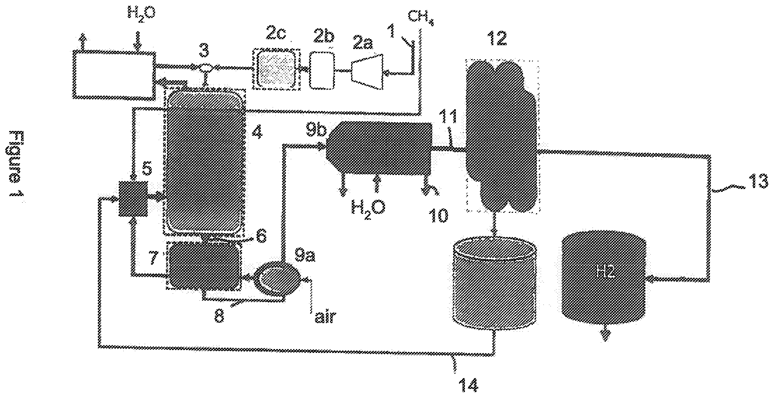

Le schéma classique d'une installation de production d'hydrogène par reformage de méthane à la vapeur (SMR) est reproduit sur la figure 1 et peut être résumé comme suit.

La charge d'alimentation sous pression (gaz naturel, mélange d'hydrocarbures légers ou autre charge de même type) est, selon sa composition, désulfurée, optionnellement pré reformée, puis elle est reformée pour produire un gaz de synthèse contenant essentiellement $H_2$, $CO_2$, CO, avec en quantités moindres $CH_4$ et $N_2$ ainsi que de la vapeur d'eau. Lorsque le gaz de synthèse est produit dans une optique de production finale d'hydrogène, il passe ensuite en général dans un ou plusieurs réacteurs dits réacteurs de « shift » où le monoxyde de carbone est converti en dioxyde de carbone par réaction avec de la vapeur et en produisant un supplément d'hydrogène.

Le gaz de synthèse en sortie du réacteur de shift, et après refroidissement à température ambiante et élimination des condensats de procédé contient approximativement de 75 à 82% d'hydrogène, 2 à 3% de monoxyde de carbone, 10 à 20% de dioxyde de carbone, 0.3 à 4% de méthane, ainsi que des composés traces, dont selon les cas de l'azote.

Afin de produire de l'hydrogène pur, une purification complémentaire est ensuite réalisée qui utilise la technologie PSA qui permet de produire un courant gazeux d'hydrogène ultra pur.

Cependant, si le procédé de purification par PSA fournit un produit de très haute qualité, il ne permet par contre de récupérer que de l'ordre de 75 à 90% de l'hydrogène entrant dans le PSA selon la complexité du cycle du PSA (en particulier le nombre d'équilibrages et d'adsorbeurs), fonction aussi du débit. Pour compenser la perte d'hydrogène au niveau du PSA, il faut donc majorer la taille du reformeur pour atteindre la production recherchée. Le reformeur doit de plus être apte à fonctionner à une pression élevée, de l'ordre de 25 bars pour produire un syngas à une pression suffisante pour le traitement aval, et en particulier pour optimiser le fonctionnement du PSA, ceci accroît encore le coût du reformeur.

Selon le schéma conventionnel de fonctionnement de ce type d'installation, les gaz de purge du PSA sont utilisés comme gaz combustible pour le reformeur.

Différentes solutions connues visant à « dégoulotter » les installations de production d'hydrogène sont présentées ci-après :

- baisse de la pureté de l'hydrogène produit par un réglage du PSA ; 2 à 3 points de rendement du PSA supplémentaires (soit une augmentation du rendement de 78 à 81 % pour un système à 4 adsorbeurs et un équilibrage) peuvent par exemple être gagnés en passant de 1ppm CO à 10ppm CO, soit jusqu'à 5% de production supplémentaire (81/78=3.8%)

  ◦ avantage : pas d'arrêt de l'installation ;
  ◦ inconvénients : la nouvelle pureté plus faible peut ne pas être compatible avec la spécification client, l'augmentation de la productivité est faible ;

- changement des catalyseurs du reformeur (augmentation possible de production de 5-8%) ;

  ∘ avantage : peut se faire lors d'un changement programmé (tous les 4 à 5 ans) ;
  ∘ inconvénients : opération très lourde car nécessitant l'arrêt de l'installation, gain de productivité pas toujours évident et parfois instable dans le temps, le PSA peut rester l'élément limitant ;

- changement des adsorbants du PSA (augmentation possible de production de 2-5% en fonction des adsorbants) ;

  ∘ avantage : augmentation de productivité ;
  ∘ inconvénients : opération très lourde, l'installation doit être arrêtée, les adsorbants n'ont en général pas besoin d'être changés ;

- ajout d'un HTS (High Temperature Shift) et/ou d'un LTS (Low Temperature Shift) (augmentation possible de production de 5%) ;

  ∘ avantage : gains de productivité ;
  ∘ inconvénients : l'opération est très lourde, l'installation doit être arrêtée, les conditions opératoires de l'installation doivent être modifiées (rapport vapeur/carbone), le PSA peut être l'élément limitant ; par ailleurs, les installations conçues pour produire de l'hydrogène possèdent déjà pour la plupart un réacteur de shift - un HTS et parfois un LTS ;

- changement du PSA pour un PSA de rendement plus élevé (gain de productivité possible de 5%) ;

  ∘ avantage : augmentation de productivité ;
  ∘ Inconvénients : l'opération est très lourde, l'installation doit être arrêtée, l'investissement est très élevé.

Si on considère une installation de reformage classique, du type de celle de la figure 1, plus sa taille est grande, plus son rendement est élevé car plus le rendement du cycle du PSA est élevé (nombre d'équilibrages du cycle plus important), alors que le rendement du four reste sensiblement identique. En effet, pour un gaz provenant d'un reformeur classique, des cycles PSA différents (avec des nombres d'adsorbeurs différents) sont utilisés en fonction du débit avec des rendements typiques différents comme le montre le tableau 1 ci-après.

Tableau 1: rendement classique de PSA en fonction de la production $H_2$

| PSA (nb adsorbeurs) | 4 | 5 | 6 | 8 | 10 |
|---|---|---|---|---|---|
| Débit $H_2$ (Nm$^3$/h) | 100-2000 | 2000-10000 | 10000-25000 | 20000-50000 | 50000 + |
| Rendement $H_2$ PSA | 78-80% | 82-84% | 84-86% | 85-87% | 87-89% |

En raison du rendement limité du PSA, le résiduaire de PSA présente donc une teneur en hydrogène importante - ainsi que l'illustre l'exemple rapporté dans le tableau 2 présenté plus loin - et ce d'autant plus lorsque l'installation est de taille réduite. Si cet hydrogène peut être récupéré en tant que produit, il a en général une valeur très supérieure à celle qu'il peut avoir en tant que combustible.

Ainsi donc, récupérer (de) l'hydrogène à partir du résiduaire gazeux du PSA peut permettre de valoriser mieux le gaz de synthèse produit par le reformeur, et peut aussi permettre de faire face à des besoins nouveaux en hydrogène sans faire appel aux solutions onéreuses et d'efficacité limitée telles qu'énumérées ci-dessus, pour autant que ce supplément d'hydrogène puisse être produit à des conditions de pureté et de coût satisfaisantes.

La purification de l'hydrogène par voie électrochimique à l'aide de membranes échangeuses de proton - ou membranes PEM (acronyme de leur nom anglais « proton exchange membrane ») - est connue, elle est notamment décrite dans le document US2015/0001091 A1 et dans US 2011/233072 A1.

Il est aussi connu du document US2014/0332405 A1 d'augmenter le rendement d'une installation de production d'hydrogène en récupérant de l'hydrogène additionnel présent dans le résiduaire gazeux basse pression provenant de l'unité de purification PSAH$_2$. la solution consiste à alimenter une cellule électrochimique à partir dudit résiduaire gazeux basse pression de sorte à séparer de l'hydrogène additionnel dudit résiduaire gazeux basse pression, le courant d'hydrogène additionnel produit à l'aide de la membrane PEM est récupéré et combiné avec l'hydrogène haute pression produit par l'unité PSA avec pour résultat d'augmenter la quantité d'hydrogène produit par l'installation.

Il est aussi connu de EP 2 141 119 A1 un procédé pour une production d'hydrogène par reformage et purification d'hydrogène par PSA avec récupération conjointe de dioxyde de carbone, pour cela, le résiduaire de PSA est traité dans deux membranes différentes successives, l'une pour séparer du dioxyde de carbone, et l'autre pour séparer de l'hydrogène, avec recyclage du perméat de la membrane hydrogène enrichi en hydrogène à l'entrée du PSA.

Il est aussi connu de FR 2 877 939 A1 un procédé pour une production combinée d'hydrogène et de dioxyde de carbone dans lequel le résiduaire de PSA est traité pour produire un fluide enrichi en dioxyde de carbone par condensations / séparations successives et traitement des incondensables pour produire un perméat riche en hydrogène pouvant être recyclé au PSA

Il est aussi connu du document US2014/0311917 A1 d'appliquer la purification électrochimique d'hydrogène directement au gaz de synthèse sortant du reformeur.

Cependant, les méthodes décrites ci avant ne permettent pas d'atteindre des puretés d'hydrogène élevées, et en particulier des puretés d'hydrogène compatibles avec la norme ISO relative à la pureté de l'hydrogène destiné aux piles à combustible (ISO14687), particulièrement la spécification CO de 0,2 ppm et H2O de 5 ppm pour les raisons suivantes :

- les membranes résistantes au CO fonctionnent à haute température (plus de 100-120°C), une diffusion gazeuse du CO à travers la cathode se fait naturellement (loi de Fick) de sorte qu'il reste de l'ordre de 0,05% CO à la cathode ;
- ce système de séparation par membranes électrochimiques fonctionne en conditions humides, l'hydrogène produit contient donc de l'eau, à une teneur supérieure à la limite fixée par la norme ISO 14687 qui est de 5ppm de $H_2O$.

Il existe donc un besoin pour un procédé simple qui :

- permette de valoriser au mieux la quasi-totalité de l'hydrogène présent dans un gaz de synthèse, sans présenter de coût additionnel trop important par rapport au coût d'une purification via une simple unité PSA $H_2$ ;
- préserve la très haute pureté de l'hydrogène produit ;
- puisse s'appliquer à toute nouvelle installation de production d'hydrogène utilisant la purification par PSA $H_2$, quelle que soit sa taille ;
- soit utilisable sur une installation existante, permettant ainsi de dégoulotter l'installation et de satisfaire des besoins supplémentaires en hydrogène.

L'invention vise donc à augmenter le rendement en hydrogène d'une installation de production d'hydrogène - par reformage de gaz naturel (ou charge comparable) et purification de l'hydrogène par PSA - en préservant la pureté du produit et à moindre coût.

La solution selon l'invention consiste à installer un système / cellule de purification électrochimique d'hydrogène fonctionnant à l'aide d'une membrane échangeuse de protons - système dit EHS (acronyme pour l'expression anglaise correspondante Electrochemical Hydrogen Séparation) - installé sur le gaz résiduaire du PSA (fluide 14 sur les figures) et combiné avec une recirculation de l'hydrogène purifié et comprimé (compression mécanique ou électrochimique combinée avec l'étape de séparation dans la même cellule électrochimique) à l'entrée du PSA de sorte à augmenter le rendement global d'une installation existante, tout en maintenant la qualité de l'hydrogène produit.

Dans ce but, l'invention concerne une méthode de dégoulottage d'une installation produisant de l'hydrogène comprenant un module de génération d'un gaz de synthèse par reformage à partir d'hydrocarbures légers, optionnellement un module de shift pour l'enrichissement en hydrogène et dioxyde de carbone par conversion du monoxyde de carbone contenu dans le gaz de synthèse avec de la vapeur d'eau, une unité PSA-$H_2$ pour la purification de l'hydrogène et la production d'un flux gazeux haute pression d'hydrogène ultra pur, en particulier conforme à la norme ISO14687 avec production associée d'un résiduaire gazeux basse pression (résiduaire de PSA) dont les deux constituants majeurs sont du dioxyde de carbone et de l'hydrogène, méthode selon laquelle on installe une cellule de purification électrochimique d'hydrogène sur le résiduaire gazeux basse pression du PSA de sorte à séparer de l'hydrogène et un résiduaire (résiduaire de cellule EHS) appauvri en hydrogène à partir dudit résiduaire de PSA, l'hydrogène étant récupéré pour former un flux d'hydrogène additionnel qui est comprimé jusqu'à une pression comprise entre 8 et 25 bar et envoyé en tout ou partie à l'entrée de l'unité PSA pour augmenter la production d'hydrogène de l'installation tout en maintenant inchangée la pureté de l'hydrogène produit par le PSA.

De la sorte, grâce à la solution de l'invention on augmente la production d'hydrogène de l'installation tout en maintenant inchangée la pureté de l'hydrogène produit par l'unité PSA. Le module de purification de l'installation - combinant le PSA et la cellule électrochimique de séparation d'hydrogène (système EHS) installé sur le résiduaire avec recirculation à l'entrée du PSA - assure alors un rendement en hydrogène global de l'installation proche de 99% lorsque la totalité du flux d'hydrogène additionnel en provenance de la cellule est envoyé pour alimenter le PSA. La pureté de l'hydrogène produit en sortie du PSA reste quant à elle inchangée.

Selon un autre aspect de l'invention, celle-ci concerne un procédé de production d'hydrogène dont le rendement global est optimisé dès sa conception. En effet, l'installation d'une cellule EHS sur le résiduaire du PSA peut aussi se faire lors de l'implantation d'une nouvelle installation, elle permet dans ce cas d'avoir directement un rendement en hydrogène très puroptimisé, sans avoir à sur-dimensionner les organes situés en amont du PSA.

Dans ce but, l'invention concerne un procédé de production d'hydrogène comprenant au moins les étapes de :

a) génération par reformage d'un gaz de synthèse à partir d'une charge d'hydrocarbures légers,

b) enrichissement optionnel du gaz de synthèse en hydrogène et dioxyde de carbone par conversion à la vapeur du monoxyde de carbone en dioxyde de carbone,

c) purification du gaz de synthèse enrichi pour la production d'un flux gazeux haute pression d'hydrogène ultra pur par adsorption à pression modulée (PSA-H2) avec production associée d'un résiduaire de PSA gazeux basse pression dont les deux constituants majeurs sont du dioxyde de carbone et de l'hydrogène,

d) alimentation d'une cellule électrochimique (cellule EHS) avec tout ou partie du résiduaire de PSA à basse pression pour récupérer de l'hydrogène additionnel à partir du résiduaire de PSA, ainsi qu'un résiduaire (résiduaire de cellule) appauvri en hydrogène,

e) compression de l'hydrogène additionnel récupéré jusqu'à une pression comprise entre 8 bar et 25 barg,

f) recyclage de tout ou partie de l'hydrogène additionnel récupéré comprimé dans le procédé en amont de l'unité PSA pour alimenter le PSA de sorte à augmenter le rendement de production d'hydrogène très haute pureté de l'installation.

L'utilisation de la membrane électrochimique pour la séparation de l'hydrogène du résiduaire en complément du PSA selon l'invention, que ce soit pour un dégoulottage ou *ab initio,* présente plusieurs avantages :

- la cellule électrochimique EHS est alimentée par un gaz basse pression, le résiduaire du PSA peut donc être utilisé tel qu'il est produit par le PSA sans compression préalable;
- en complétant l'alimentation du PSA par le «complément» gazeux très riche en hydrogène (98% selon exemple) en provenance de la cellule EHS, la teneur en hydrogène du gaz d'alimentation du PSA est significativement augmentée, le rendement et la productivité du PSA sont eux aussi significativement améliorés - ainsi que le montre l'exemple présenté plus loin dans la description.

Avantageusement, l'invention présente une ou plusieurs des variantes suivantes :

- l'étape e) de compression de l'hydrogène additionnel récupéré est assurée au moins en partie par la cellule électrochimique ; en effet, si on augmente le potentiel appliqué à la cellule électrochimique, celle-ci peut aussi comprimer l'hydrogène qu'elle produit ; c'est une alternative -ou un complément - à un autre moyen de compression du flux d'hydrogène produit par la membrane, par exemple à un compresseur mécanique pour la compression nécessaire avant d'alimenter le PSA ;
- une partie de l'hydrogène récupéré à partir de la cellule EHS est utilisé pour désulfuriser la charge d'hydrocarbures légers à reformer ;
- une partie de l'hydrogène récupéré sortant de la cellule EHS est utilisé pour alimenter directement un client ayant une exigence de pureté faible ; on peut aussi prévoir qu'en période de diminution du besoin d'hydrogène ultra pur, l'hydrogène sortant de la cellule puisse être utilisé de manière temporaire à d'autres fins, sans être recyclé vers le PSA ;
- en cas de production d'hydrogène en excès, le fonctionnement de la cellule électrochimique est interrompu de sorte à optimiser la consommation électrique de l'installation ;
- tout ou partie du résiduaire de cellule - résiduaire appauvri en $H_2$ sortant de la membrane - est récupéré pour produire du dioxyde de carbone.

Selon un autre aspect de l'invention, celle-ci concerne une installation de production d'hydrogène à partir d'un flux d'alimentation d'hydrocarbures légers présentant un rendement optimisé comprenant au moins :

- un module de génération par reformage d'un gaz de synthèse à partir dudit flux d'alimentation d'hydrocarbures légers ;
- un module optionnel de conversion à la vapeur du monoxyde de carbone en dioxyde de carbone pour l'enrichissement en hydrogène et dioxyde de carbone du gaz de synthèse ;
- une unité PSA-$H_2$ pour la purification de l'hydrogène contenu dans le gaz de synthèse avec production d'un flux gazeux sortant haute pression d'hydrogène ultra pur et production associée d'un résiduaire de PSA gazeux sortant basse pression dont les deux constituants principaux sont du dioxyde de carbone et de l'hydrogène ;
- une cellule électrochimique (cellule EHS) apte à être alimentée par le résiduaire de PSA gazeux basse pression et apte à séparer de l'hydrogène présent dans le résiduaire de PSA des autres constituants de sorte à produire un flux d'hydrogène et à en recirculer tout ou une partie vers l'unité PSA-H2, ains qu' un résiduaire appauvri en hydrogène (résiduaire de cellule EHS) ;

- un moyen de compression du flux d'hydrogène séparé par la cellule EHS ;
- un moyen de traitement et/ou un moyen d'utilisation du résiduaire de cellule EHS ;
- ainsi que des moyens de sortie, de conduite et d'alimentation des différents flux mis en oeuvre.

Avantageusement, l'installation selon l'invention présente une ou plusieurs des variantes suivantes :

- la cellule électrochimique est apte à assurer au moins en partie la compression de l'hydrogène additionnel récupéré ;
- l'installation comprend des moyens pour comprimer et pour transférer au moins une partie de l'hydrogène additionnel récupéré en sortie de la cellule électrochimique vers un module de désulfuration de la charge d'hydrocarbures légers ;
- l'installation comprend des moyens d'utilisation du résiduaire appauvri en hydrogène sortant de la cellule électrochimique (résiduaire de cellule EHS) en tant que combustible pour le reformage et/ou pour produire du dioxyde de carbone.

L'invention va être mieux comprise grâce à la description qui va suivre, faite en références aux figures annexées parmi lesquelles :

- La figure 1 est un schéma de principe d'une installation de production d'hydrogène conventionnelle ;
- La figure 2 est un schéma de principe d'une installation de production d'hydrogène de même type, mais dégoulottée conformément à l'invention.

Selon le schéma conventionnel de la figure 1, une charge d'hydrocarbures **1** destinée à produire l'hydrogène est soumise à une étape - optionnelle - de compression **2a,** puis à une étape de désulfuration **2b** et à une étape - optionnelle - de préreformage **2c,** avant d'être mélangée - après préchauffage non représenté - à de la vapeur d'eau au point de mélange **3** puis introduite dans un réacteur **4** de reformage à la vapeur où elle est reformée à haute température grâce à de la chaleur externe fournie par des brûleurs **5** installés dans des parois du réacteur **4** - les brûleurs pouvant être installés dans les parois latérales, installés en terrasse, en voûte ou en sole selon les constructeurs - pour produire un gaz de synthèse **6,** mélange contenant pour l'essentiel de l'hydrogène et des oxydes de carbone - principalement du CO.

Le gaz de synthèse **6,** aussi appelé syngas est produit à hautes température (de l'ordre de 600°C 800°C) et pression, il est ensuite enrichi en $H_2$ et $CO_2$ dans un réacteur de shift **7** par conversion du CO par la vapeur d'eau excédentaire présente dans le syngas pour produire le syngas enrichi en hydrogène **8.**

Après refroidissement en **9a** et **9b** jusqu'à température ambiante et avec séparation des condensas **10,** le syngas enrichi en $H_2$ et $CO_2$ et refroidi **11** alimente une unité PSA **12.**

Dans un contexte de petite production, par exemple pour un débit d'hydrogène inférieur à 2 000Nm3 d'$H_2$, le rendement $H_2$ du PSA est de l'ordre de 78-80% pour 4 adsorbeurs ; ainsi que le rapporte le tableau I, il augmente dans le cas d'installations de grande taille atteignant 88-89% pour 10 adsorbeurs pour des installations produisant 50 000Nm$^3$/h ou plus.

L'unité PSA **12** produit de l'hydrogène **13** ultra pur sous pression, ainsi qu'un résiduaire gazeux **14** basse pression qui réunit l'ensemble des composant présents en plus de l'hydrogène dans le syngas **11** alimentant le PSA, c'est-à-dire le $CO_2$ très majoritaire, mais aussi le CO, le $CH_4$ résiduel, de la vapeur d'eau, de l'azote, mais aussi à côté de ces gaz, de l'hydrogène en proportion d'autant plus importante que l'installation est petite.

L'hydrogène produit **13** passe (optionnellement) dans un réservoir tampon de production (non référencé) afin de lisser les variations de pression et de débit liées aux cycles du PSA. Une capacité tampon **14** est installée sur le gaz résiduaire du PSA afin de lisser les variations de pression, de débit et de composition du gaz résiduaire qui pourraient affecter la bonne marche des brûleurs du four de reformage.

Le gaz résiduaire est utilisé comme gaz combustible, notamment pour le chauffage du reformeur, en raison de ses teneurs en hydrogène et méthane.

Le schéma ne reproduit pas la complexité de l'installation ; parmi les éléments du procédé global - non nécessaires pour la compréhension de l'invention - seuls quelques uns sont présents (référencés ou non) : échangeur de chaleur **9b** entre le syngas **8** et de l'eau avec récupération des condensas **10** en amont du PSA, alimentation et préchauffage de l'air de combustion, alimentation en eau de l'installation avec chauffage dans la chambre de convection du reformeur contre les fumées et dans l'échangeur **9b** contre le syngas etc.

Le bilan matière de la récupération d'hydrogène pour une installation de type conventionnel telle que celle de la figure 1 sur la base d'un PSA à 4 adsorbeurs - est présenté dans les tableaux 2 A, 2 B et 2 C ci-dessous

Tableau 2 A : compositions % mol

| Référence du fluide | 11 | 14 | 13 |
|---|---|---|---|
| Composants | % | % | % |
| Hydrogène $H_2$ | 76.4 | 39.2 | > 99.99 |
| Azote N | 00.2 | 00.6 | < 100 ppm |
| Méthane $CH_4$ | 03.5 | 08.9 | < 10 ppm |
| Monoxyde de carbone CO | 02.0 | 05.1 | < 10 ppm |
| Dioxyde de carbone $CO_2$ | 17.7 | 45.5 | < 10ppm |
| Eau $H_2O$ | 00.3 | 00.7 | < 10ppm |
| Total | 100.0 | 100.0 | 100.0 |

Tableau 2 B : paramètres (Température, Pression ; Débits)

| Température °C | 35 | 35 | 35 |
|---|---|---|---|
| Pression en barg | 21 | 0.01 | 20 |
| Débit $Nm^3/h$ | 1000 | 389.12 | 610.88 |

Tableau 2 C Débits (Nm3/h)

| Hydrogène $H_2$ | 763.60 | 152.72 | 610.88 |
|---|---|---|---|
| Azote N | 002.40 | 002.40 | - |
| Méthane $CH_4$ | 034.70 | 034.70 | - |
| Monoxyde de carbone CO | 019.70 | 019.70 | - |
| Dioxyde de carbone $CO_2$ | 176.90 | 176.90 | - |
| Eau $H_2O$ | 002.70 | 002.70 | - |

Globalement, l'efficacité en hydrogène de cette installation conventionnelle est celle du PSA, elle est donc de 80% (= Débit $H_2$ flux 13 / Débit $H_2$ flux11)

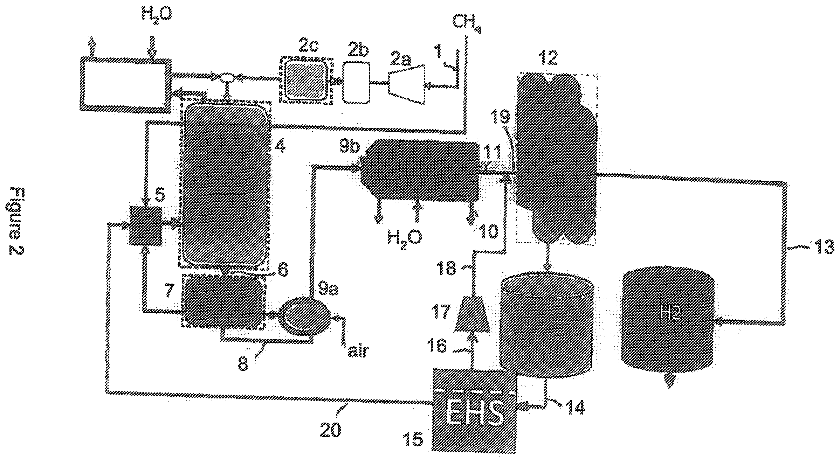

Le schéma de la figure 2 représente une installation déduite de celle de la figure 1, mais qui a été dégoulottée en application de l'invention. Les éléments de la figure 1 que l'on retrouve sur la figure 2 portent les mêmes références, en particulier l'ensemble des fluides et moyens participant à la génération du gaz de synthèse en amont de la purification de l'hydrogène.

C'est ainsi que la charge d'hydrocarbures **1** est ici aussi comprimée, désulfurée et préréformée en **2a, 2b, 2c** avant d'être mélangée à la vapeur d'eau au point de mélange **3** puis introduite dans le réacteur de reformage à la vapeur **4** où elle est reformée à haute température grâce à de la chaleur externe fournie par les brûleurs **5** pour produire le gaz de synthèse (ou syngas) **6.**

Le syngas à température et pression élevées est enrichi en $H_2$ et $CO_2$ dans un réacteur de shift **7** par réaction entre de la vapeur d'eau et le CO présent dans le syngas.

Après refroidissement jusqu'à température ambiante et séparation des condensas, le syngas **11** enrichi en $H_2$ et $CO_2$ est envoyé vers l'unité PSA.

L'unité PSA **12** produit de l'hydrogène **13** très haute pureté sous pression, ainsi que le résiduaire du PSA gazeux basse pression **14.**

L'hydrogène produit **13** passe (optionnellement) dans un réservoir tampon de production (non référencé) afin de lisser les variations de pression et de débit liées aux cycles du PASA Une capacité tampon **14** est installée sur le gaz résiduaire du PSA afin de lisser les variations de pression, de débit et de composition du gaz résiduaire du PSA.

En application de l'invention, le gaz résiduaire **14** alimente une cellule de purification électrochimique **15** qui fonctionne de la manière suivante : la cellule électrochimique sépare les constituants du résiduaire **14** de l'hydrogène et produit ainsi de l'hydrogène **16** ainsi qu'un second flux gazeux **20** contenant essentiellement l'ensemble des gaz présents dans le résiduaire du PSA **14** avec seulement quelques pourcents d'hydrogène. Ce second flux gazeux **20** (identifié en tant que résiduaire de cellule EHS) est - dans l'exemple - utilisé comme gaz combustible pour le chauffage du reformeur. D'autres utilisations connues en soit sont possibles en fonction des circonstances et des besoins. L'hydrogène **16** est comprimé en **17,** le gaz ainsi comprimé **18** est réuni avec le syngas **11** pour former un nouveau gaz d'alimentation **19** pour le PSA **12.**

Le bilan matière de la récupération d'hydrogène pour une installation conventionnelle du type de celle de la figure 1 est présenté dans les tableaux 3 A, 3 B, 3 C ci-dessous qui présentent un (nouveau) bilan matière calculé pour l'unité dégoulottée :

Tableau 3 A compositions %

| Référence du fluide | 11 | 19 | 14 | 20 | 16 | 18 | 13 |
|---|---|---|---|---|---|---|---|
| Composants | % | % | % | % | % | % | % |
| $H_2$ | 76.4 | 79.1 | 37.6 | 3.0 | 98.40 | 98.40 | > 99.99 |
| N | 0.2 | | 0.6 | 1.0 | 00.05 | 00.05 | < 100 ppm |
| $CH_4$ | 3.5 | | 9.1 | 14.2 | 00.05 | 00.05 | < 10 ppm |
| CO | 2.0 | | 5.2 | 8.1 | 00.05 | 00.05 | < 10 ppm |
| $CO_2$ | 17.7 | | 46.2 | 72.6 | 00.05 | 00.05 | <10 ppm |
| $H_2O$ | 0.3 | | 1.2 | 1.1 | 01.40 | 00.30 | < 10 ppm |
| Total | 100.0 | 100.0 | 100.0 | 100.0 | 100.00 | 98.90 | 100 |

Tableau 3 B: paramètres (Température, Pression ; Débits)

| Température °C | 35 | 35 | 35 | 35 | 35 | 35 | 35 |
|---|---|---|---|---|---|---|---|
| Pression en barg | 21 | 0.01 | 0.01 | 0.01 | 15 | 21 | 20 |
| Débit $Nm^3/h$ | 1000 | 1139.1 | 382.70 | 243.60 | 139.10 | 139.10 | 756.40 |

Tableau 3 C (Nm3/h)

| | | | | | | | |
|---|---|---|---|---|---|---|---|
| $H_2$ | 763.60 | 900.47 | 144.08 | 7.20 | 136.87 | 136.87 | 756.40 |
| N | 2.40 | 2.47 | 2.47 | 2.40 | 0.07 | 0.07 | |
| $CH_4$ | 34.70 | 34.77 | 34.77 | 34.70 | 0.07 | 0.07 | |
| CO | 19.70 | 19.77 | 19.77 | 19.70 | 0.07 | 0.07 | |
| $CO_2$ | 176.90 | 176.97 | 176.97 | 176.90 | 0.07 | 0.07 | |
| $H_2O$ | 2.70 | 4.65 | 4.65 | 2.70 | 1.95 | 1.95 | |

Dans lequel la puissance de compression estimée est de 51.64 KW, la puissance EHS estimée est de 23.24 KW.

L'efficacité Hydrogène globale est de 99% (Tableau 3C : valeurs fluide 13 / valeurs fluide 11) avec une efficacité Hydrogène EHS de 95% (Tableau 3C : valeurs fluide 16 / valeurs fluide 14), et une efficacité Hydrogène PSA de 84% (Tableau 3C : valeurs flux13/valeurs flux 19).

Dans l'exemple présenté ici, pour un même débit que dans la version conventionnelle sans EHS, le débit d'hydrogène produit (à pureté identique) passe donc de 610 $Nm^3/h$ à 756 $Nm^3/h$, soit une augmentation de 24% pour un besoin en électricité supplémentaire maximum de 75kW.

Ce besoin en électricité supplémentaire peut être avantageusement réduit (à environ 40KW) en combinant l'étape de purification électrochimique et l'étape de compression dans la même cellule électrochimique.

La séparation d'hydrogène par membrane échangeuse de proton PEM - mise en oeuvre dans les cellules EHS - appliquée à la séparation de l'hydrogène contenue dans le résiduaire gazeux du PSA fonctionne de la manière suivante : le résiduaire gazeux du PSA, disponible à une température de l'ordre de la température ambiante et à une pression supérieure de 300 à 500 mbar à la pression atmosphérique alimente une cellule électrochimique qui contient des électrodes recouvertes de catalyseur de part et d'autre d'une membrane. Lorsque le courant électrique passe dans les électrodes, la membrane PEM utilisée dans la cellule EHS permet à l'hydrogène - sous forme $H_3O^+$ - de passer sélectivement au travers de la membrane, de sorte que de l'hydrogène pur est récupéré de l'autre côté.

Les réactions en jeu sont :

A l'anode : ½ $H_2$ =>$H^+$ + e-
A la cathode : $H^+$ + e- => ½ $H_2$
Au final, le bilan est : $H_2$ => $H_2$ l'hydrogène étant transféré du compartiment anodique au compartiment cathodique.

Le potentiel électrochimique est :

$$E^{cathode} - E^{anode} = -\frac{R \cdot T}{2 \cdot F} \ln\left(\frac{P_{H_2}^{Cathode}}{P_{H_2}^{Anode}}\right)$$

La membrane crée en même temps par là même un deuxième courant contenant les autres composés du résiduaire du PSA, lesquels ne peuvent traverser la membrane qui les rejette ; ils forment le courant « rejeté ». Ce courant rejeté - c'est le courant **20** de la figure 2 et de l'exemple, c'est donc le gaz résiduaire de l'EHS au sens de l'invention. Il pourra selon sa composition être effectivement rejeté, ou traité et / ou réutilisé dans d'autres procédés, ou utilisé comme combustible dans le four de reformage comme le montre l'exemple présenté.

Quant à l'hydrogène ainsi récupéré en sortie de la cellule EHS, il n'a pas une pureté suffisante pour être ajouté à l'hydrogène produit par le PSA dont il dégraderait fortement la qualité, après compression, Il est par contre tout à fait adapté pour être recyclé pour alimenter le PSA. A noter que l'hydrogène peut aussi être simultanément comprimé

Parmi les avantages de l'invention, on citera :

- augmentation de la production d'hydrogène d'une installation existante dans des proportions bien supérieures à celles que l'on peut atteindre par les moyens classiques de dégoulottage ;
- pas de modifications de l'installation nécessitant de lourds travaux ;
- conservation de la pureté du gaz hydrogène produit ;
- dans le cas d'une nouvelle installation adoptant la solution de l'invention lors de la construction, production d'hydrogène très haute pureté avec un rendement en hydrogène maximum, le sur-dimensionnement des autres équipements (SMR notamment) peut alors être évité ;
- possibilité de récupération du second fluide produit par la cellule EHS (flux 20 sur la figure 2) pauvre en $H_2$ et riche en $CO_2$ afin de produire du $CO_2$ si celui-ci est valorisable ou afin de procéder à une capture de $CO_2$ en cas de besoin.

## Revendications

1. Méthode de dégoulottage d'une installation produisant de l'hydrogène comprenant un module (4) de génération d'un gaz de synthèse (6) par reformage à partir d'hydrocarbures légers, optionnellement un module (7) de shift pour l'enrichissement en hydrogène et dioxyde de carbone par conversion du monoxyde de carbone contenu dans le gaz de synthèse avec de la vapeur d'eau - ainsi qu'une unité (12) PSA-$H_2$ pour la purification de l'hydrogène et la production d'un flux gazeux (13) haute pression d'hydrogène ultra pur avec production associée d'un résiduaire gazeux (14) basse pression de PSA dont les deux constituants majeurs sont du dioxyde de carbone et de l'hydrogène, **caractérisée en ce qu'**on installe une cellule (15) de purification électrochimique (EHS) d'hydrogène sur le résiduaire gazeux (14) basse pression du PSA de sorte à séparer de l'hydrogène et un résiduaire (20) de cellule EHS appauvri en hydrogène à partir dudit résiduaire de PSA, l'hydrogène (16) étant récupéré pour former un flux d'hydrogène additionnel qui est comprimé jusqu'à une pression comprise entre 8 et 25 bar et envoyé en tout ou partie à l'entrée de l'unité PSA pour augmenter la production d'hydrogène de l'installation tout en maintenant inchangée la pureté de l'hydrogène produit par le PSA.

2. Procédé de production d'hydrogène comprenant au moins les étapes de :

   a) génération par reformage d'un gaz de synthèse (6) à partir d'une charge d'hydrocarbures légers,
   b) enrichissement optionnel du gaz de synthèse (6) en hydrogène et dioxyde de carbone par conversion à la vapeur du monoxyde de carbone en dioxyde de carbone,
   c) purification du gaz de synthèse enrichi pour la production d'un flux gazeux haute pression (13) d'hydrogène ultra pur par adsorption à pression modulée (PSA-H2) avec production associée d'un résiduaire (14) de PSA gazeux basse pression dont les deux constituants majeurs sont du dioxyde de carbone et de l'hydrogène,

d) alimentation d'une cellule (15) électrochimique(EHS) avec tout ou partie du résiduaire de PSA à basse pression pour récupérer de l'hydrogène additionnel (16) à partir du résiduaire de PSA, ainsi qu'un résiduaire de cellule EHS appauvri en hydrogène (20),

e) compression de l'hydrogène additionnel récupéré jusqu'à une pression comprise entre 8 bar et 25 bar barg,

f) recyclage de tout ou partie de l'hydrogène additionnel récupéré comprimé dans le procédé en amont de l'unité PSA pour alimenter le PSA de sorte à augmenter le rendement de production d'hydrogène très haute pureté de l'installation.

3. Procédé selon la revendication 2 dans lequel, en cas de production d'hydrogène (13) en excès, le fonctionnement de la cellule électrochimique (15) est interrompu.

4. Procédé selon la revendication 2 **caractérisé en ce que** l'étape e) de compression de l'hydrogène additionnel récupéré est assurée au moins en partie par la cellule électrochimique.

5. Procédé selon la revendication 2 ou la revendication 4 dans lequel au moins une partie de l'hydrogène additionnel récupéré en sortie de la cellule électrochimique est utilisé pour désulfuriser la charge d'hydrocarbures légers préalablement à l'étape a).

6. Procédé selon l'une des revendications 2, 4 ou 5 dans laquelle tout ou partie du résiduaire appauvri en hydrogène sortant de la cellule électrochimique (EHS) est récupéré pour produire du dioxyde de carbone.

7. Procédé selon l'une des revendications 2, ou 4 à 6 dans laquelle au moins une partie du résiduaire appauvri en hydrogène sortant de la cellule électrochimique (EHS) est utilisé comme combustible de reformage.

8. Installation de production d'hydrogène à partir d'un flux d'alimentation d'hydrocarbures légers présentant un rendement optimisé comprenant au moins :

   • un module (4) de génération par reformage d'un gaz de synthèse (6) à partir dudit flux d'alimentation d'hydrocarbures légers ;

   • un module optionnel (7) de conversion à la vapeur du monoxyde de carbone en dioxyde de carbone pour l'enrichissement en hydrogène et dioxyde de carbone du gaz de synthèse ;

   • une unité (12) PSA-H$_2$ pour la purification de l'hydrogène contenu dans le gaz de synthèse avec production d'un flux gazeux (13) sortant haute pression d'hydrogène ultra pur et production associée d'un résiduaire de PSA gazeux sortant (14) basse pression dont les deux constituants principaux sont du dioxyde de carbone et de l'hydrogène ;

   • une cellule (15) électrochimique (cellule EHS) installée sur le résiduaire avec recirculation (18) à l'entrée du PSA apte à être alimentée par le résiduaire de PSA gazeux basse pression (14) et apte à séparer de l'hydrogène présent dans le résiduaire de PSA, des autres constituants de sorte à produire un flux (16) d'hydrogène et un résiduaire de cellule EHS (20) appauvri en hydrogène;

   • un moyen de compression (17) du flux d'hydrogène (16) séparé par la cellule EHS;

   • un moyen de traitement et/ou un moyen (5) d'utilisation du résiduaire (20) de cellule EHS;

   • ainsi que des moyens de sortie, de conduite et d'alimentation des différents flux mis en œuvre.

9. Installation selon la revendication 8 dans laquelle la cellule électrochimique (15) est apte à assurer au moins en partie la compression de l'hydrogène additionnel récupéré.

10. Installation selon la revendication 8 ou la revendication 9 comprenant en outre des moyens pour comprimer et pour transférer au moins une partie de l'hydrogène additionnel récupéré en sortie de la cellule électrochimique vers un module de désulfuration (2b) de la charge d'hydrocarbures légers.

11. Installation selon l'une des revendications 8 à 10 comprenant en outre des moyens d'utilisation du résiduaire appauvri en hydrogène sortant de la cellule électrochimique en tant que combustible pour le reformage et / ou pour produire du dioxyde de carbone.

**Patentansprüche**

1. Verfahren zur Engstellenbeseitigung bei einer Anlage zur Wasserstofferzeugung mit einem Modul (4) zur Herstellung eines Synthesegases (6) mittels Reformierung aus leichten Kohlenwasserstoffen, gegebenenfalls einem Shiftmodul (7) zur Anreicherung mit Wasserstoff und Kohlendioxid durch Umsetzung des im Synthesegas enthaltenen Kohlenmonoxids mit Wasserdampf - sowie einer PSA-$H_2$-Einheit (12) zum Reinigen von Wasserstoff und zur Erzeugung eines ultrareinen Hochdruck-Wasserstoff-Gasstroms (13) mit zugehöriger Erzeugung eines Niederdruck-PSA-Restgases (14), dessen zwei Hauptbestandteile Kohlendioxid und Wasserstoff sind, **dadurch gekennzeichnet, dass** eine elektrochemische Reinigungszelle (EHS) (15) für Wasserstoff derart im Niederdruck-PSA-Restgas (14) montiert wird, dass von dem PSA-Restgas Wasserstoff und ein EHS-Zell-Restgas (20) mit einem geringeren Wasserstoffgehalt abgetrennt werden, wobei der Wasserstoff (16) dafür gewonnen wird, dass ein zusätzlicher Wasserstoffstrom gebildet wird, der bis auf einen Druck zwischen 8 und 25 bar komprimiert und vollständig oder teilweise zum Einlass der PSA-Einheit geleitet wird, damit die Wasserstoffproduktion der Anlage erhöht wird und gleichzeitig die Reinheit des mittels PSA erzeugten Wasserstoffs beibehalten bleibt.

2. Verfahren zur Erzeugung von Wasserstoff, das mindestens folgende Schritte umfasst:

   a) mittels Reformierung Herstellen eines Synthesegases (6) aus einem Einsatzmaterial aus leichten Kohlenwasserstoffen,

   b) gegebenenfalls Anreichern des Synthesegases (6) mit Wasserstoff und Kohlendioxid mittels Umsetzen des Kohlenmonoxids zu Kohlendioxid mit Wasserdampf,

   c) Reinigen des angereicherten Synthesegases zur Erzeugung eines ultrareinen Hochdruck-Wasserstoff-Gasstroms (13) mittels modulierter Druckwechseladsorption (PSA-$H_2$) mit zugehöriger Erzeugung eines gasförmigen Niederdruck-PSA-Restgases (14), wobei die beiden Hauptbestandteile Kohlendioxid und Wasserstoff sind,

   d) Speisen einer elektrochemischen Zelle (15) (EHS) mit dem gesamten Niederdruck-PSA-Restgas oder einem Teil davon, damit zusätzlicher Wasserstoff (16) aus dem PSA-Restgas sowie ein EHS-Zell-Restgas (20) mit einem geringeren Wasserstoffgehalt gewonnen wird,

   e) Komprimieren des gewonnenen zusätzlichen Wasserstoffs bis auf einen Druck zwischen 8 bar und 25 bar barg,

   f) Zurückführen des gesamten komprimierten gewonnenen zusätzlichen Wasserstoffs oder eines Teils davon in das Verfahren stromaufwärts der PSA-Einheit zum Speisen der PSA, damit die Produktionsausbeute der Anlage an sehr hochreinem Wasserstoff erhöht wird.

3. Verfahren nach Anspruch 2, wobei im Falle einer Erzeugung von überschüssigem Wasserstoff (13) der Betrieb der elektrochemischen Zelle (15) unterbrochen wird.

4. Verfahren nach Anspruch 2, **dadurch gekennzeichnet, dass** für den Schritt e) zum Komprimieren des gewonnenen zusätzlichen Wasserstoffs zumindest teilweise die elektrochemische Zelle sorgt.

5. Verfahren nach Anspruch 2 oder Anspruch 4, wobei zumindest ein Teil des am Auslass der elektrochemischen Zelle gewonnenen zusätzlichen Wasserstoffs zum Entschwefeln des Einsatzmaterials aus leichten Kohlenwasserstoffen vor Schritt a) verwendet wird.

6. Verfahren nach einem der Ansprüche 2, 4 oder 5, wobei das gesamte Restgas mit einem geringeren Wasserstoffgehalt, das aus der elektrochemischen Zelle (EHS) strömt, oder ein Teil davon zur Erzeugung von Kohlendioxid gewonnen wird.

7. Verfahren nach einem der Ansprüche 2 oder 4 bis 6, wobei zumindest ein Teil des Restgases mit einem geringeren Wasserstoffgehalt, das aus der elektrochemischen Zelle (EHS) strömt, als Reformierungsbrennstoff verwendet wird.

8. Anlage zur Erzeugung von Wasserstoff aus einem Zustrom leichter Kohlenwasserstoffe mit optimierter Ausbeute, die mindestens Folgendes umfasst:

   • ein Modul (4) zur Herstellung eines Synthesegases (6) mittels Reformierung aus dem Zustrom leichter Kohlenwasserstoffe;

   • ein optionales Modul (7) zur Umsetzung von Kohlenmonoxid mit Wasserdampf zu Kohlendioxid zum Anreichern des Synthesegases mit Wasserstoff und Kohlendioxid;

   • eine PSA-$H_2$-Einheit (12) zum Reinigen des im Synthesegas enthaltenen Wasserstoffs unter Erzeugung eines abströmenden gasförmigen ultrareinen Hochdruck-Wasserstoffstroms (13) und zugehöriger Erzeugung eines abströmenden gasförmigen Niederdruck-PSA-Restgases (14), dessen zwei Hauptbestandteile Kohlendioxid und Wasserstoff sind;

• eine elektrochemische Zelle (15) (EHS-Zelle), die mit Rückführung (18) zum Einlass der PSA im Restgas montiert und in der Lage ist, mit dem gasförmigen Niederdruck-PSA-Restgas (14) gespeist zu werden und in der Lage ist, den im PSA-Restgas vorhandenen Wasserstoff von den anderen Bestandteilen abzutrennen, damit ein Wasserstoffstrom (16) und ein EHS-Zell-Restgas (20) mit einem geringeren Wasserstoffgehalt erzeugt werden;

• ein Kompressionsmittel (17) für den Wasserstoffstrom (16), den die EHS-Zelle abgetrennt hat;

• ein Mittel zur Behandlung und/oder ein Mittel (5) zur Nutzung des EHS-Zell-Restgases (20);

• sowie Mittel zum Ableiten, Leiten und Zuführen der verschiedenen verwendeten Ströme.

9. Anlage nach Anspruch 8, wobei die elektrochemische Zelle (15) in der Lage ist, zumindest teilweise für die Kompression des gewonnenen zusätzlichen Wasserstoffs zu sorgen.

10. Anlage nach Anspruch 8 oder Anspruch 9, die ferner Mittel zum Komprimieren und zum Weiterleiten von zumindest einem Teil des gewonnenen zusätzlichen Wasserstoffs, der am Auslass der elektrochemischen Zelle gewonnen wird, in Richtung eines Entschwefelungsmoduls (2b) des Einsatzmaterials aus leichten Kohlenwasserstoffen umfasst.

11. Anlage nach einem der Ansprüche 8 bis 10, die ferner Mittel zum Verwenden des Restgases mit einem geringeren Wasserstoffgehalt, das aus der elektrochemischen Zelle (EHS) strömt, als Brennstoff für die Reformierung und/oder zum Erzeugen von Kohlendioxid umfasst.

## Claims

1. Method for debottlenecking a hydrogen production plant comprising a module (4) for generating a synthesis gas (6) by reforming from light hydrocarbons, optionally a shift module (7) for enrichment in hydrogen and carbon dioxide by conversion of the carbon monoxide contained in the synthesis gas with water vapor - and also a PSA-H$_2$ unit (12) for the purification of hydrogen and the production of a high-pressure gas stream (13) of ultrapure hydrogen with associated production of a PSA low-pressure gaseous waste (14), the two major constituents of which are carbon dioxide and hydrogen, **characterized in that** an electrochemical hydrogen purification (EHS) cell (15) is installed on the PSA low-pressure gaseous waste (14) so as to separate hydrogen and a hydrogen-depleted EHS cell waste (20) from said PSA waste, the hydrogen (16) being recovered to form an additional hydrogen stream which is compressed to a pressure of between 8 and 25 bar and sent entirely or in part to the inlet of the PSA unit to increase the hydrogen production of the plant while keeping the purity of the hydrogen produced by the PSA unchanged.

2. Hydrogen production process comprising at least the steps of:

a) generating, by reforming, a synthesis gas (6) from a light hydrocarbon feedstock,

b) optionally enriching the synthesis gas (6) with hydrogen and carbon dioxide by steam conversion of the carbon monoxide to give carbon dioxide,

c) purifying the enriched synthesis gas for the production of a high-pressure gas stream (13) of ultrapure hydrogen by pressure swing adsorption (PSA-H2) with associated production of a low-pressure gaseous PSA waste (14), the two major constituents of which are carbon dioxide and hydrogen,

d) supplying an (EHS) electrochemical cell (15) with all or part of the low-pressure PSA waste in order to recover additional hydrogen (16) from the PSA waste, and also a hydrogen-depleted EHS cell waste (20),

e) compressing the additional hydrogen recovered to a pressure of between 8 bar and 25 bar barg,

f) recycling all or part of the compressed recovered additional hydrogen in the process upstream of the PSA unit to supply the PSA so as to increase the production yield of very high purity hydrogen of the plant.

3. Process according to Claim 2, in which, in the event of production of excess hydrogen (13), the operation of the electrochemical cell (15) is interrupted.

4. Process according to Claim 2, **characterized in that** the step e) of compressing the additional hydrogen recovered is carried out at least in part by the electrochemical cell.

5. Process according to Claim 2 or Claim 4, in which at least one portion of the additional hydrogen recovered at the outlet of the electrochemical cell is used to desulfurize the light hydrocarbon feedstock prior to step a) .

6. Process according to one of Claims 2, 4 or 5, in which all or part of the hydrogen-depleted waste leaving the (EHS) electrochemical cell is recovered to produce carbon dioxide.

7. Process according to one of Claims 2 or 4 to 6, in which at least one portion of the hydrogen-depleted waste leaving the (EHS) electrochemical cell is used as reforming fuel.

8. Plant for producing hydrogen from a light hydrocarbon feed stream having an optimized yield comprising at least:

   • a module (4) for generating, by reforming, a synthesis gas (6) from said light hydrocarbon feed stream;
   • an optional module (7) for steam conversion of the carbon monoxide to give carbon dioxide, for enriching the synthesis gas with hydrogen and carbon dioxide;
   • a PSA-$H_2$ unit (12) for purifying the hydrogen contained in the synthesis gas with production of an outgoing high-pressure gas stream (13) of ultrapure hydrogen and associated production of a low-pressure outgoing gaseous PSA waste (14), the two main constituents of which are carbon dioxide and hydrogen;
   • an electrochemical cell (15) (EHS cell) installed on the waste with recirculation (18) at the inlet of the PSA capable of being supplied by the low-pressure gaseous PSA waste (14) and capable of separating hydrogen present in the PSA waste from the other constituents so as to produce a hydrogen stream (16) and a hydrogen-depleted EHS cell waste (20) ;
   • a means (17) for compressing the hydrogen stream (16) separated by the EHS cell;
   • a means for treating and/or a means (5) for using the EHS cell waste (20);
   • and also means for discharging, conveying and supplying the various streams used.

9. Plant according to Claim 8, in which the electrochemical cell (15) is capable of carrying out, at least in part, the compression of the additional hydrogen recovered.

10. Plant according to Claim 8 or Claim 9, further comprising means for compressing and for transferring at least a portion of the additional hydrogen recovered at the outlet of the electrochemical cell to a module for desulfurization (2b) of the light hydrocarbon feedstock.

11. Plant according to one of Claims 8 to 10, further comprising means for using the hydrogen-depleted waste leaving the (EHS) electrochemical cell as fuel for the reforming and/or for producing carbon dioxide.

Figure 1

Figure 2

## RÉFÉRENCES CITÉES DANS LA DESCRIPTION

**Documents brevets cités dans la description**

- US 20150001091 A1
- US 2011233072 A1
- US 20140332405 A1
- EP 2141119 A1
- FR 2877939 A1
- US 20140311917 A1